# EUROPÄISCHE PATENTANMELDUNG

(11) **EP 3 412 249 A1**
(43) Veröffentlichungstag der Anmeldung: **12.12.2018**
(21) Anmeldenummer: 18175304.7
(22) Anmeldetag: 31.05.2018
(51) Int. Cl.: A61C 19/00

(54) **HANDHABUNGSVORRICHTUNG FÜR EIN DENTALWERKSTÜCK UND SOCKEL DAFÜR**

(30) Priorität: 08.06.2017 DE 102017112655
(71) Anmelder: Frankenstein, Riccardo, 37359 Grossbartloff (DE)
(72) Erfinder: Frankenstein, Riccardo, 37359 Grossbartloff (DE)
(74) Vertreter: Schneider, Peter Christian

(57) **Zusammenfassung**

Die Erfindung bezieht sich auf eine Handhabungsvorrichtung für ein Dentalwerkstück (12), umfassend
- eine Basis mit einer ebenen Arbeitsfläche (22, 22') und
- einen mit einer an seiner Unterseite angeordneten, ebenen Auflagefläche auf der Arbeitsfläche (22, 22') gleitfähig lagerbaren Sockel (18), der auf seiner Oberseite eine Fixiervorrichtung (122) für das Dentalwerkstück (12) trägt.

Die Erfindung zeichnet sich dadurch aus, dass
- die Arbeitsfläche (22, 22') durchbrochen ist von einer mit einer Absaugeinrichtung koppelbaren Absaugöffnung (221, 221') einer ersten, kleineren Öffnungsgröße und
- die Unterseite des Sockels (18) eine von der Auflagefläche umstandene, untere Sockelöffnung (184) einer zweiten, größeren Öffnungsgröße aufweist, die mit einer die Oberseite des Sockels (18) durchbrechenden, oberen Sockelöffnung (183) saugtechnisch verbunden ist.

## Beschreibung

### Gebiet der Erfindung

Die Erfindung bezieht sich auf eine Handhabungsvorrichtung für ein Dentalwerkstück, umfassend
- eine Basis mit einer ebenen Arbeitsfläche und
- einen mit einer an seiner Unterseite angeordneten, ebenen Auflagefläche auf der Arbeitsfläche gleitfähig lagerbaren Sockel, der auf seiner Oberseite eine Fixiervorrichtung für das Dentalwerkstück trägt.

Die Erfindung bezieht sich weiter auf einen Sockel für eine derartige Handhabungsvorrichtung.

### Stand der Technik

Gattungsgemäße Handhabungsvorrichtungen sind bekannt aus der DE 87 09 853 U1.

Die Herstellung von Dentalelementen, wie beispielsweise Zahnimplantaten und sogenannten Teleskopkronen oder Doppelkronen, erfordert eine äußert filigrane Bearbeitung entsprechender Werkstücke, die hier allgemein als Dentalwerkstücke angesprochen werden sollen. Hierzu wird das Dentalwerkstück typischerweise auf einem sogenannten Frässockel fixiert. Dies kann mittels spezieller Klemmvorrichtungen kraft-und/oder formschlüssig oder auch stoffschlüssig, beispielsweise durch bereichsweises Eingipsen der Werkstücke auf dem Frässockel, erfolgen. Die spezielle Art der Fixierung spielt im Kontext der vorliegenden Erfindung keine Rolle; die hier verwendete Bezeichnung "Fixiervorrichtung" soll jegliche fixierende Schnittstelle zwischen dem Sockel und dem Dentalwerkstück umfassen. Da die branchenübliche Bezeichnung "Frässockel" eine hier nicht intendierte Beschränkung auf ein bestimmtes Bearbeitungsverfahren, nämlich das Fräsen, suggerieren könnte, wird im Kontext der vorliegenden Beschreibung allgemein von einem Sockel gesprochen.

Der Sockel ist eine mobile Einheit, die mit einer ebenen Auflagefläche an ihrer Unterseite auf einer ebenfalls ebenen Arbeitsfläche aufliegt und dort leicht mittels Handkraft verschoben werden kann. Die ebene Arbeitsfläche wird häufig von einer glatten Oberseite einer Werkbank gebildet. Sie kann von Nuten durchzogen sein, in denen sich während der Bearbeitung des Werkstücks Bearbeitungsstaub sammeln und/oder in denen bei der Bearbeitung genutzte Hilfsflüssigkeit abfließen kann. Oberhalb der Arbeitsfläche ist üblicherweise ein ggf. höhenverstellbares Werkzeug, wie beispielsweise ein Fräser, angeordnet. Zur Bearbeitung des Dentalwerkstücks wird der Sockel vom Bearbeiter so auf der Arbeitsfläche verschoben, dass das Dentalwerkstück an den jeweils zu bearbeitenden Stellen das Werkzeug kontaktiert. Die Verschiebung des großen, vergleichsweise schweren Sockels kann dabei wesentlich präziser erfolgen, als wenn der Bearbeiter das kleine, vergleichsweise leichte Dentalwerkstück direkt handhaben müsste.

Unabhängig vom konkreten Bearbeitungsverfahren entstehen bei der Bearbeitung Stäube und/oder Dämpfe, bei der Verwendung von Hilfsflüssigkeiten, beispielsweise in Form von Sprühnebeln, können zusätzlich Aerosole gebildet werden. Nachfolgend soll diesbezüglich allgemein von "Emissionen" gesprochen werden. Der das Dentalwerkstück handhabende Bearbeiter kommt bei der Bearbeitung dem Dentalwerkstück und insbesondere der Bearbeitungsstelle mit seinem Gesicht sehr nahe. Das birgt die Gefahr, dass besagte Emissionen eingeatmet werden. Dies kann durch geeigneten Mund- und Nasenschutz zwar vermindert werden, für den Bearbeiter komfortabler wäre jedoch eine geeignete Absaugung.

Absaugvorrichtungen für die spanende Bearbeitung stauberzeugender Werkstoffe sind beispielsweise bekannt aus der DE 10 2004 008 101 A1. Bei der dort offenbarten Immissionsschutzvorrichtung sind das Werkstück in einem nach oben und das Werkzeug in einem nach unten offenen Trichter positioniert, deren Ränder bei der Bearbeitung miteinander verbunden werden, sodass das Werkstück in einem geschlossenen Schutzraum bearbeitet wird, aus dem die Emissionen abgesaugt werden können.

Wenigstens einer der beiden Trichter ist flexibel gestaltet, um die zur Bearbeitung erforderliche Relativbewegung von Werkzeug und Werkstück zu ermöglichen. Eine solche Immissionsschutzvorrichtung mag im Fall einer automatisierten Bearbeitung tauglich sein. Im Fall der stets höchst individuellen, manuellen Bearbeitung von Dentalwerkstücken, bei der der Bearbeiter zu jedem Zeitpunkt Sichtkontakt mit der Bearbeitungsstelle haben muss, ist eine solche Vorrichtung jedoch nicht einsetzbar.

### Aufgabenstellung

Es ist die Aufgabe der vorliegenden Erfindung, eine gattungsgemäße Handhabungsvorrichtung um eine Immissionsschutzvorrichtung zu erweitern, durch welche der eigentliche Bearbeitungsvorgang nicht behindert wird.

### Darlegung der Erfindung

Diese Aufgabe wird in Verbindung mit den Merkmalen des Oberbegriffs von Anspruch 1 dadurch gelöst, dass die Arbeitsfläche durchbrochen ist von einer mit einer Absaugeinrichtung koppelbaren Absaugöffnung einer ersten, kleineren Öffnungsgröße und die Unterseite des Sockels eine von der Auflagefläche umstandene, untere Sockelöffnung einer zweiten, größeren Öffnungsgröße aufweist, die mit einer die Oberseite des Sockels durchbrechenden, oberen Sockelöffnung saugtechnisch verbunden ist.

Da für unterschiedliche Dentalwerkstücke ggf. unterschiedliche Sockel mit ggf. unterschiedlichen Fixiervorrichtungen Einsatz finden können, stellt ein entsprechender Sockel als solcher ein wesentliches, eigenständig merkantiles Element der vorliegenden Erfindung dar. Ein solcher Sockel ist Gegenstand von Anspruch 9, d.h. ein Sockel für eine erfindungsgemäße Handhabungsvorrichtung mit einer an seiner Unterseite angeordneten, ebenen Auflagefläche zur gleitfähigen Lagerung auf einer ebenen Arbeitsfläche, der auf seiner Oberseite eine Fixiervorrichtung für ein Dentalwerkstück trägt und dessen Unterseite eine von der Auflagefläche umstandene, untere Sockelöffnung aufweist, die mit einer die Oberseite des Sockels durchbrechenden, oberen Sockelöffnung saugtechnisch verbunden ist.

Bevorzugte Ausführungsformen sind Gegenstand der abhängigen Patentansprüche.

Der Grundgedanke der vorliegenden Erfindung besteht darin, in unmittelbarer Nähe zu der Bearbeitungsstelle eine Absaugung von Emissionen vorzunehmen und diese durch den Sockel selbst abzuführen. Allerdings wird der Sockel dabei nicht unmittelbar, beispielsweise über einen an ihn angekoppelten Absaugschlauch, mit einer Absaugvorrichtung verbunden. Dies würde die zur Bearbeitung erforderliche Bewegbarkeit des Sockels in linearer und insbesondere in rotatorischer Hinsicht beeinträchtigen. Vielmehr erfolgt die Kopplung mit der eigentlichen Absaugvorrichtung mittelbar über die Arbeitsfläche, die hierzu eine entsprechende Absaugöffnung aufweist. Die saugtechnische Verbindung zwischen der oberen Sockelöffnung, in welche die Emissionen von der Bearbeitungsstelle eingesaugt werden, und der Absaugöffnung in der Arbeitsfläche erfolgt über die untere Sockelöffnung, die in der Unterseite des Sockels angeordnet ist, mit welcher dieser auf der Arbeitsfläche aufliegt. Der Fachmann wird verstehen, dass eine saugtechnische Verbindung zwischen der oberen Sockelöffnung und einer mit der Absaugöffnung der Arbeitsfläche gekoppelten Absaugvorrichtung selbstverständlich nur dann zustande kommt, wenn die untere Sockelöffnung und die Absaugöffnung der Arbeitsfläche einander wenigstens bereichsweise überlappen. Entsprechend wird die Absaugöffnung der Arbeitsfläche innerhalb einer vollständigen Bearbeitungsvorrichtung unterhalb, bevorzugt senkrecht und zentriert unterhalb des jeweiligen Werkzeugs zu positionieren sein.

Die Erfindung sieht speziell vor, dass die untere Sockelöffnung größer ist als die Absaugöffnung der Arbeitsfläche. Hierdurch wird es möglich, den Sockel auf der Arbeitsfläche zu verschieben ohne das Ausmaß der (Voll-)Überlappung der beiden Öffnungen zu verändern. Die Absaugwirkung bleibt trotz der Sockelbewegung somit gleich. Das Ausmaß der Bewegungsfreiheit für den Sockel ist dabei in offensichtlicher Weise abhängig von der Größendifferenz der beiden Öffnungen. Der Fachmann wird diese so zu wählen wissen, dass die für die konkrete Bearbeitung eines konkreten Dentalwerkstücks erforderliche Bewegungsfreiheit gewährleistet ist. Gegebenenfalls können eine oder beide der einander überlappenden Öffnungen größenvariabel gestaltet sein. Dies ermöglicht einerseits eine Einstellung der Absaugstärke und andererseits eine Einstellung der Bewegungsfreiheit des Sockels.

Aufgrund der Erfindung ergibt sich für den Bearbeiter hinsichtlich der Werkstückbearbeitung keinerlei Änderung im Vergleich zu einer Bearbeitung unter Nutzung eines Sockels nach dem Stand der Technik. Insbesondere kann er den Sockel in gewohnter Weise drehen und verschieben. Im Gegensatz zum Stand der Technik ist er jedoch keinen schädlichen Immissionen ausgesetzt, da die verursachten Emissionen in unmittelbarer Nähe der Bearbeitungsstelle abgesaugt werden.

Die obere Sockelöffnung durchbricht die Oberseite des Sockels daher bevorzugt nahe der Fixiereinrichtung. Günstigerweise ist sogar eine Mehrzahl oberer Sockelöffnungen vorgesehen, die bevorzugt ringförmig um die Fixiervorrichtung angeordnet sind. Dies erlaubt eine zuverlässige Absaugung unabhängig von der konkreten Bearbeitungsstelle am Dentalwerkstück.

Bei einer besonders vorteilhaften Ausgestaltung der Erfindung ist der Sockel glockenartig ausgebildet, wobei der Glockenrand dessen (ringförmige) Auflagefläche bildet. Die Fixiervorrichtung ist dabei bevorzugt im Zentrum des Glockendachs angeordnet. Hierdurch wird einerseits eine besonders gute Erreichbarkeit des Werkstücks durch das Werkzeug ermöglicht. Andererseits bietet die Glockenform eine maximal große untere Sockelöffnung und damit eine (bei gegebener Größe der Absaugöffnung) maximale Bewegungsfreiheit des Sockels. Die obere Sockelöffnung durchbricht bei dieser Ausführungsform bevorzugt das Glockendach des glockenartig ausgebildeten Sockels. Hierdurch wird die größtmögliche Nähe zur Bearbeitungsstelle gewährleistet.

Günstigerweise ist die ebene Arbeitsfläche von Nuten durchzogen, die in ihren Kreuzungsbereichen mit der auf der Arbeitsfläche aufgelegten Auflagefläche des Sockels das Sockelinnere mit dem Sockeläußeren verbindende Strömungskanäle bilden, deren Querschnittssumme kleiner als die Größe jeder oberen Sockelöffnung ist. Wie eingangs erwähnt, sind Nuten in der ebenen Arbeitsfläche grundsätzlich bekannt. Im Kontext der vorliegenden Erfindung erhalten sie jedoch eine besondere Funktion. In den Kreuzungsbereichen mit der Auflagefläche des Sockels werden die ansonsten offenen Nuten zu geschlossenen Kanälen. Diese bilden eine saugtechnische Verbindung zwischen dem Inneren des Sockels und der Umgebung. Über diese zusätzlichen Saugkanäle können solche Emissionsanteile, die nicht unmittelbar in die oberen Sockelöffnungen eingesaugt wurden, sondern auf die Arbeitsfläche gefallen sind, ebenfalls abgesaugt werden. Dies wird zusätzlich dadurch begünstigt, dass solche auf der Arbeitsfläche liegenden Emissionen bei Schiebebewegungen des Sockels vom Sockelrand in die Nuten gekehrt werden, wo sie von der erläuterten Saugwirkung erfasst werden können. Dabei ist jedoch darauf zu achten, dass dieser Saugnebenschluss die primäre Saugwirkung an den oberen Sockelöffnungen nicht übermäßig beeinträchtigt. Die angegebene Relativdimensionierung der Nuten im Vergleich zu den oberen Sockelöffnungen hat sich diesbezüglich als besonders günstig erwiesen.

Selbstverständlich ist es möglich, die Arbeitsfläche in eine stationäre Werkbank zu integrieren, wie dies im Stand der Technik bekannt und üblich ist. Bei einer Weiterbildung der Erfindung ist die Arbeitsfläche jedoch auf der Oberseite einer mobilen Dose angeordnet, die in ihrer seitlichen Dosenwand einen Anschlussstutzen zum Anschließen eines Verbindungsschlauchs zu der Absaugeinrichtung aufweist. Dies erhöht die Einsatzflexibilität der erfindungsgemäßen Handhabungsvorrichtung. Ist die Arbeitsfläche Teil einer stationären Werkbank, so ist auch ihre Absaugöffnung stationär. Sie kann unterhalb eines bestimmten Werkzeugs angeordnet sein. Ist jedoch bei der konkreten Bearbeitung des Dentalwerkstücks ein Werkzeugwechsel erforderlich, muss das Werkzeug umgespannt werden, was mit Zeitverlust verbunden ist. Alternativ könnten mehrere Werkzeuge nebeneinander bereitgehalten werden. Dies würde jedoch zusätzliche Absaugöffnungen unter diesen weiteren Werkzeugen erfordern. Durch den damit verbundenen Druckverlust müsste die Absaugeinrichtung entsprechend groß ausgebildet werden, was im Hinblick auf den damit verbundenen Energieverbrauch und die Lärmbelästigung nicht wünschenswert ist. Bei der vorgenannten Ausgestaltung der Arbeitsfläche als Oberfläche einer mobilen Dose ist jedoch auch die Absaugöffnung mobil und kann bedarfsweise unter unterschiedlichen Werkzeugen positioniert werden. Gegebenenfalls können auf der Werkbank spezielle Fixiervorrichtungen, beispielsweise Schnellspannklammern, vorgesehen sein, die eine einfache, sichere und schnelle Umpositionierung der Dose ermöglichen.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematisierte, teilweise geschnittene Seitenansicht einer Dentalwerkstück-Bearbeitungsvorrichtung, umfassend eine erfindungsgemäße Handhabungsvorrichtung,
- Figur 2:: die Bearbeitungsvorrichtung von Figur 1 in stark schematisierter Draufsicht und
- Figur 3:: eine Seitenansicht im Schnitt einer weiteren Dose einer erfindungsgemäßen Handhabungsvorrichtung.

### Beschreibung bevorzugter Ausführungsformen

Gleiche Bezugszeichen in den Figuren deuten auf gleiche oder analoge Elemente hin.

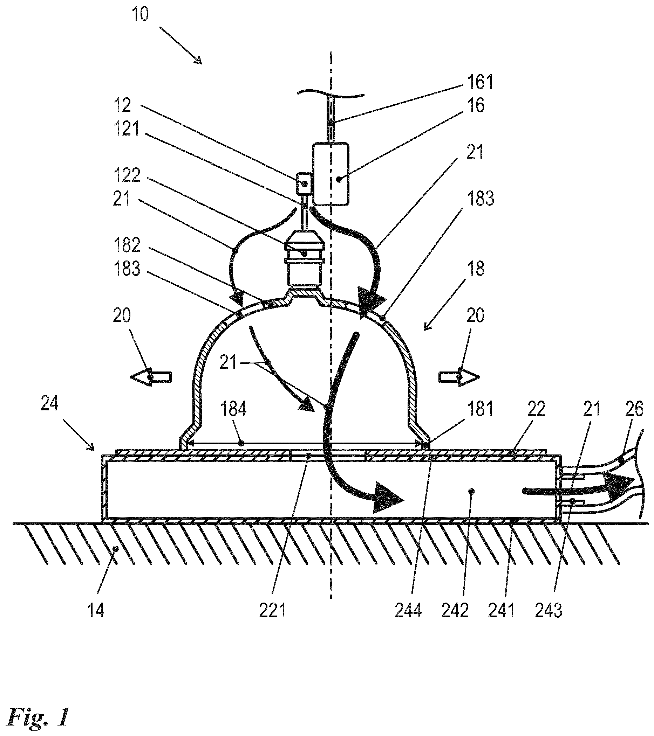

Figur 1 zeigt in schematisierter, teilweise geschnittener Seitenansicht eine Bearbeitungsvorrichtung 10 für ein Dentalwerkstück 12. Die Bearbeitungsvorrichtung 10 umfasst eine lediglich angedeutete Werkbank 14 und ein darüber positioniertes Werkzeug 16, das beispielsweise als Fräser, Bohrer, Schleifkopf oder ähnliches ausgebildet sein kann und über eine Welle 161 mit einem nicht dargestellten motorischen Antrieb verbunden ist.

Das Dentalwerkstück 12 ist auf einem Haltepin 121 befestigt, der seinerseits in eine Spannvorrichtung 122 eines im Übrigen im Wesentlichen glockenförmig ausgebildeten Sockels 18 eingespannt ist. Auf diese Weise ist das Dentalwerkstück 12 starr mit dem Sockel 18 verbunden. Der Sockel 18 ist, wie durch die Pfeile 20 angedeutet, verschiebbar und rotierbar auf einer Arbeitsfläche 22 gelagert. Er liegt dabei mit seinem Glockenrand 181, der eine ebene Ringfläche bildet, auf der Arbeitsfläche 22 auf. Zur filigranen Bearbeitung des Dentalwerkstücks 12 wird dieses durch Verschiebung und/oder Rotation des Sockels 18 auf der Arbeitsfläche 22 an das Werkzeug 16 herangeführt und zur spanenden Bearbeitung mit diesem präzise in Kontakt gebracht.

Der Sockel 18 ist - entsprechend seiner Glockenform - hohl ausgebildet und weist im Bereich seines Glockendachs 182 eine Mehrzahl von oberen Sockelöffnungen 183 auf, welche die Spannvorrichtung 122 ringförmig umstehen. Der Bodenbereich des Sockels 18 ist - entsprechend seiner Glockenform - offen, sodass der Glockenrand 181 eine große untere Sockelöffnung 184 umgreift.

Bei der gezeigten Ausführungsform bildet die Arbeitsfläche 22 die Oberfläche einer hohlen Dose 24, deren Dosenboden 241 auf der Werkbank 14 aufliegt und deren Innenraum 242 über einen Anschlussstutzen 243 mit dem Dosenäußeren verbunden ist. Der Anschlussstutzen 243 ist über einen Schlauch 26 mit einer nicht dargestellten Absaugvorrichtung, insbesondere einem in Saugrichtung betriebenen Gebläse, saugtechnisch verbunden. Die Dose 24 kann mittels nicht dargestellter Fixierungsmittel unterhalb des Werkzeugs 16, insbesondere in zentrierter Ausrichtung zu diesem, auf der Werkbank 14 fixiert sein.

Der Dosendeckel 244 sowie die Arbeitsfläche 22, die durchaus auch einstückig ausgebildet, d.h. miteinander identisch sein können, sind jeweils von einer Öffnung durchbrochen, wobei die Öffnungen gemeinsam eine Absaugöffnung 221 bilden, über welche der Innenraum 242 der Dose 24 mit dem Dosenäußeren verbunden ist.

Zur Ausnutzung der sich aus der Erfindung ergebenden Vorteile bei der Bearbeitung des Dentalwerkstücks 12 wird der Sockel 18 so auf die Arbeitsfläche 22 gesetzt, dass sein Glockenrand 181 die Absaugöffnung 221, die ja erfindungsgemäß kleiner ist als die untere Sockelöffnung 184, vollumfänglich umgibt. Auf diese Weise entsteht eine saugtechnische Verbindung von den oberen Sockelöffnungen 183 durch den Hohlraum des Sockels 18, die Absaugöffnung 221, den Innenraum 242 der Dose 24, den Anschlussstutzen 243 und den Schlauch 26 zur Absaugvorrichtung. Die bei der Bearbeitung des Dentalwerkstücks 12 an der Kontaktstelle zum Werkzeug 16 anfallenden Emissionen, insbesondere Staub, Gase und/oder Aerosole, werden durch diesen Absaugpfad - illustriert durch die Absaugpfeile 21 - zuverlässig abgesaugt. Eine Beeinträchtigung der Bewegbarkeit des Sockels 18 und damit der Handhabbarkeit des Dentalwerkstücks 12 ist damit nicht verbunden. Insbesondere wird die Bewegbarkeit des Sockels 18 nicht durch irgendwelche an ihm ansetzende Absaugschläuche beeinträchtigt.

Auch im Bereich der Kontaktstelle zwischen dem Dentalwerkstück 12 und dem Werkzeug 16 befinden sich keinerlei externe Absaugmittel, die die Bewegungsfreiheit des Dentalwerkstücks 12 und/oder die Sicht des Bearbeiters auf das Dentalwerkstück 12 beeinträchtigen könnten.

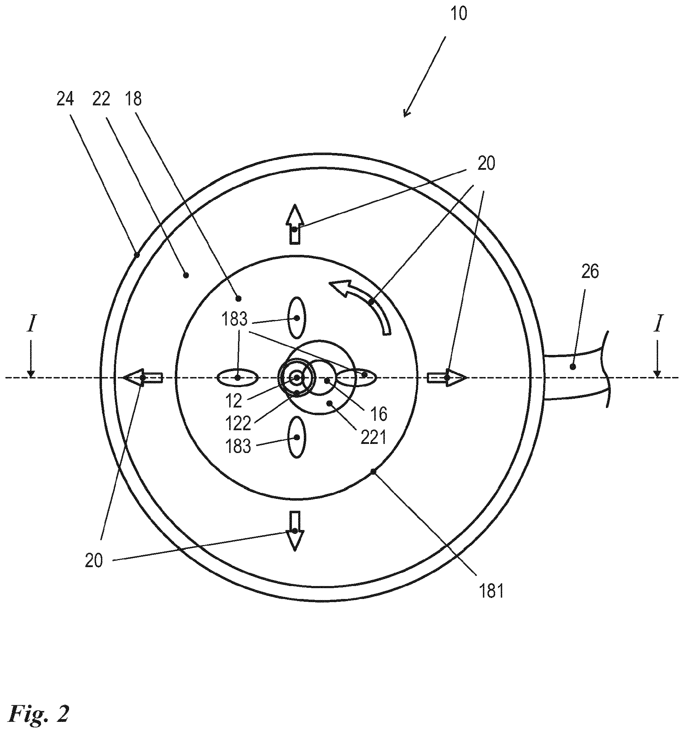

Wie insbesondere in Figur 2, die die Umrisse der einzelnen Elemente von Figur 1 in Draufsicht zeigt, gut erkennbar, hängt der Bewegungsspielraum des Sockels 18 stark von der Größendifferenz zwischen der unteren Sockelöffnung 184 und der Absaugöffnung 221 ab. Je größer die Größendifferenz, desto weiter kann der Sockel 18 unter Beibehaltung der oben erläuterten Absaugung verschoben werden. Eine Verschiebung des Sockels 18 derart, dass die Absaugöffnung 221 ganz oder teilweise in direkte saugtechnische Verbindung mit dem Glockenäußeren tritt, ist zu vermeiden, da dies die Absaugwirkung durch die oberen Sockelöffnungen 183 entsprechend reduzieren würde. Selbstverständlich hat auch die Arbeitsfläche so groß zu sein, dass der Sockel 18 im Rahmen seiner bestimmungsgemäßen Verschiebung nicht über deren Rand hinaus verschoben wird, sodass der Innenraum des Sockels 18 über seine untere Sockelöffnung 184 in direkten Kontakt mit dem Sockeläußeren treten würde.

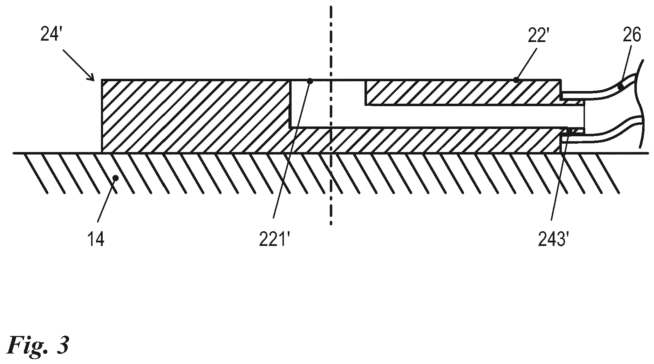

Die in den Figuren 1 und 2 gezeigte Ausführungsform stellt die besonders bevorzugte Variante einer mobilen Dose 24 als Träger der Arbeitsfläche 22 und der Absaugöffnung 221 dar. Eine weitere bevorzugte Ausführungsform einer mobilen Dose 24' ist in Figur 3 dargestellt. Die Dose 24' ist scheibenförmig ausgebildet und weist als obere Begrenzung die Arbeitsfläche 22' auf. Zwischen der Ansaugöffnung 221' und den Anschlussstutzen 243' ist ein Absaugkanal 243' angeordnet. Die scheibenförmige Dose 24' hat den Vorteil, dass sie wegen eines relativ kleinvolumigen Absaugkanals 243' ein relativ hohes Eigengewicht aufweist, das mit einer erhöhten Standfestigkeit verbunden ist.

Selbstverständlich ist es jedoch auch möglich, als Arbeitsfläche 22 unmittelbar die Oberfläche der Werkbank 14 zu wählen und die Absaugöffnung 221 stationär, ggf. verschließbar in der Werkbank mit direktem Schlauchanschluss zur Absaugvorrichtung zu positionieren.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere ist die Erfindung selbstverständlich nicht auf spezielle Bearbeitungsverfahren, wie Bohren, Fräsen, Schleifen etc. beschränkt. Auch kann die Erfindung selbstverständlich im Kontext der Bearbeitung anderer Werkstücke als Dentalwerkstücke, beispielsweise bei der Bearbeitung von Juwelierwaren oder ähnlichem, eingesetzt werden.

### Bezugszeichenliste

- 10: Bearbeitungsvorrichtung
- 12: Dentalwerkstück
- 121: Haltepin
- 122: Spannvorrichtung für 12
- 14: Werkbank
- 16: Werkzeug
- 161: Welle
- 18: Sockel
- 181: Glockenrand von 18
- 182: Glockendach von 18
- 183: obere Sockelöffnung von 18
- 184: untere Sockelöffnung von 18
- 20: Bewegungspfeile
- 21: Absaugpfeile
- 22: Arbeitsfläche
- 221,221': Absaugöffnung
- 24,24': Dose
- 241: Dosenboden von 24
- 242: Innenraum von 24
- 243, 243': Anschlussstutzen von 24
- 244: Dosendeckel von 24
- 245: Absaugkanal von 24'
- 26: Schlauch

## Patentansprüche

1. Handhabungsvorrichtung für ein Dentalwerkstück (12), umfassend
- eine Basis mit einer ebenen Arbeitsfläche (22, 22') und
- einen mit einer an seiner Unterseite angeordneten, ebenen Auflagefläche auf der Arbeitsfläche (22, 22') gleitfähig lagerbaren Sockel (18), der auf seiner Oberseite eine Fixiervorrichtung (122) für das Dentalwerkstück (12) trägt,
**dadurch gekennzeichnet, dass**
- die Arbeitsfläche (22, 22') durchbrochen ist von einer mit einer Absaugeinrichtung koppelbaren Absaugöffnung (221, 221') einer ersten, kleineren Öffnungsgröße und
- die Unterseite des Sockels (18) eine von der Auflagefläche umstandene, untere Sockelöffnung (184) einer zweiten, größeren Öffnungsgröße aufweist, die mit einer die Oberseite des Sockels (18) durchbrechenden, oberen Sockelöffnung (183) saugtechnisch verbunden ist.

2. Handhabungsvorrichtung nach Anspruch 1,
**dadurch gekennzeichnet,**
**dass** die obere Sockelöffnung (183) die Oberseite des Sockels (18) nahe der Fixiervorrichtung (122) durchbricht.

3. Handhabungsvorrichtung nach einem der vorangehenden Ansprüche,
**dadurch gekennzeichnet,**
**dass** eine Mehrzahl oberer Sockelöffnungen (183) ringförmig um die Fixiervorrichtung (122) angeordnet sind.

4. Handhabungsvorrichtung nach einem der vorangehenden Ansprüche,
**dadurch gekennzeichnet,**
**dass** der Sockel (18) glockenartig ausgebildet ist, wobei der Glockenrand (181) dessen Auflagefläche bildet.

5. Handhabungsvorrichtung nach Anspruch 4,
**dadurch gekennzeichnet,**
**dass** die obere Sockelöffnung (183) das Glockendach (182) des glockenartig ausgebildeten Sockels (18) durchbricht.

6. Handhabungsvorrichtung nach einem der vorangehenden Ansprüche,
**dadurch gekennzeichnet,**
**dass** die ebene Arbeitsfläche (22, 22') von Nuten durchzogen ist, die in ihren Kreuzungsbereichen mit der auf die Arbeitsfläche aufgelegten Auflagefläche des Sockels (18) das Sockelinnere mit dem Sockeläußeren verbindende Strömungskanäle bilden, deren Querschnittssumme kleiner als die Größe jeder oberen Sockelöffnung (183) ist.

7. Handhabungsvorrichtung nach einem der vorangehenden Ansprüche,
**dadurch gekennzeichnet,**
**dass** die Arbeitsfläche (22, 22') auf der Oberseite einer mobilen Dose (24, 24') angeordnet ist, die in ihrer seitlichen Dosenwand einen Anschlussstutzen (243, 243') zum Anschließen eines Verbindungsschlauchs (26) zu der Absaugeinrichtung aufweist.

8. Handhabungsvorrichtung nach einem der Ansprüche 1 bis 6,
**dadurch gekennzeichnet,**
**dass** die Arbeitsfläche in eine stationäre Werkbank integriert ist.

9. Sockel (18) für eine Handhabungsvorrichtung nach einem der vorangehenden Ansprüche mit einer an seiner Unterseite angeordneten, ebenen Auflagefläche zur gleitfähigen Lagerung auf einer ebenen Arbeitsfläche (22, 22'), der auf seiner Oberseite eine Fixiervorrichtung (122) für ein Dentalwerkstück (12) trägt und dessen Unterseite eine von der Auflagefläche umstandene, untere Sockelöffnung (184) aufweist, die mit einer die Oberseite des Sockels (18) durchbrechenden, oberen Sockelöffnung (183) saugtechnisch verbunden ist.
